# EUROPEAN PATENT APPLICATION

(11) **EP 4 442 730 A1**
(43) Date of publication of application: **09.10.2024**
(21) Application number: 22901791.8
(22) Date of filing: 30.11.2022
(51) Int. Cl.: C08G 73/10, C08K 3/04, C08L 79/08

(54) **POLYIMIDE POWDER WITH IMPROVED CONDUCTIVITY USING GRAPHENE AND MANUFACTURING METHOD THEREFOR**

(30) Priority: 30.11.2021 KR 20210168250
(71) Applicant: PI Advanced Materials Co., Ltd., Chungcheongbuk-do 27818 (KR)
(72) Inventor: LEE, Ho Sung, Jincheon-gun Chungcheongbuk-do 27818 (KR); YANG, Min Seok, Jincheon-gun Chungcheongbuk-do 27818 (KR); LEE, Ik Sang, Jincheon-gun Chungcheongbuk-do 27818 (KR)
(74) Representative: Eisenführ Speiser
(86) International application number: PCT/KR2022/019254
(87) International publication number: WO 2023/101433

(57) **Abstract**

The present invention relates to polyimide powder and a manufacturing method therefor. Being polymerized from diamine monomers and dianhydride monomers using graphene, the polyimide powder according to the present invention exhibits electroconductivity whilst having minimal reduction in tensile strength and elongation, and thus can be provided as a polyimide powder capable of preventing static electricity.

## Description

### [Technical Field]

The present invention relates to a polyimide powder with improved conductivity by using graphene and a preparation method thereof.

### [Background Art]

In general, polyimide (PI) is a polymer of imide monomers formed by solution polymerization of a dianhydride and a diamine or diisocyanate, and has excellent mechanical properties such as strength, chemical resistance, weather resistance, and heat resistance based on the chemical stability of the imide ring. In addition, polyimide is attracting attention as a highly functional polymer material applicable to various industrial fields such as electronics, telecommunications, or optics due to its excellent electrical properties such as insulating properties and a low dielectric constant.

Polyimide is generally prepared by synthesizing polyamic acid, which is a precursor, through the reaction of a dianhydride and a diamine in a solvent and then imidizing the polyamic acid, and polar organic solvents such as N-methyl-2-pyrrolidone (NMP) are mainly used as a reaction solvent. This general method has problems in that the process is complicated by including a two-step reaction including preparing polyamic acid and imidizing the polyamic acid, the solvent is harmful, it is difficult to obtain high molecular weight polyimide, and the imidization step requires additional catalysts or high temperatures above 300 °C.

As mentioned above, polyimide has electrical properties such as insulating properties and a low dielectric constant, but conventional polyimide powders are an insulator with high surface resistance (>10¹⁵), so the possibility of static electricity is high. In order to reduce the high surface resistance of the conventional polyimide powder, a conductive filler is added, but when a large amount of the conductive filler is added, there is a problem in that the tensile strength and elongation of the polyimide decrease.

Therefore, there is a need for research on methods capable preventing static electricity by exhibiting electrical conductivity while minimizing the decrease in tensile strength and elongation of polyimide.

### [Disclosure]

### [Technical Problem]

The purpose of the present invention is to solve the above-mentioned problems and technical problems of the conventional art.

The present invention is directed to providing a polyimide powder capable of preventing static electricity by exhibiting electrical conductivity while minimizing the decrease in tensile strength and elongation of polyimide.

### [Technical Solution]

The present invention relates to a polyimide powder and a preparation method thereof.

A polyimide powder according to the present invention has a dianhydride monomer component and a diamine monomer component as polymerization units.

In the case of conventional polyimide powders, which are an insulator with high surface resistance (>10¹⁵), there was a problem in that the possibility of static electricity is high. A conductive filler is added to reduce the high surface resistance of conventional polyimide powders, but when a large amount of the conductive filler is added, the tensile strength and elongation of polyimide decrease.

The present invention may provide a polyimide powder capable of preventing static electricity by exhibiting electrical conductivity while minimizing the decrease in the tensile strength and elongation of polyimide by polymerizing the dianhydride monomer component and the diamine monomer component with graphene.

The method of preparing a polyimide powder according to an embodiment of the present invention includes: preparing a polyamic acid solution by solution polymerization of a dianhydride monomer and a diamine monomer in an organic solvent including graphene; preparing a polyimide mixed solution by heating the polyamic acid solution; and obtaining a polyimide powder by filtering and drying a precipitate in the mixed solution.

Conventionally, dianhydride monomers and diamine monomers were dispersed in an aqueous solvent to prepare a dispersion, and then the dispersion was heat treated to prepare a polyimide powder. However, when a dispersion was prepared and heat treated by further adding graphene to an aqueous solvent as in the conventional art, there was a problem in that hydrophobic graphene aggregated within the dispersion, which reduced dispersibility.

A method of preparing a polyimide powder according to an embodiment of the present invention includes dispersing graphene, dianhydride monomers, and diamine monomers in a mixed organic solvent to form a polymerization solution (varnish) and heat treating the polymerization solution to prepare a polyimide powder, and thus the dispersibility of hydrophobic graphene may be good.

The content of graphene in the organic solvent may be, for example, 5 to 80 parts by weight, 7 to 60 parts by weight, 8 to 55 parts by weight, or 10 to 50 parts by weight, based on 100 parts by weight of the total amount of dianhydride monomers and diamine monomers. When the graphene content is too low, it is difficult to obtain the desired surface resistance. When the graphene content is too high, mechanical properties such as tensile strength or elongation may decrease.

The organic solvent of the present invention may be a mixed solvent of an aprotic solvent and a protic solvent. Compared to the use of an aprotic solvent alone or a protic solvent alone, the use of a mixed solvent has an advantage such as excellent moldability and processability.

Although not bound by theory, it is believed that an aprotic solvent acts as a kind of imidization catalyst, and a protic solvent plays a role in increasing molecular weight.

The aprotic solvent is not particularly limited but may be one or more selected from the group consisting of toluene, xylene, naphtha, anisole, cresol, ethylbenzene, propylbenzene, chlorobenzene, dichlorobenzene, trichlorobenzene, biphenyl, terphenyl, diphenyl ether, diphenyl sulfide, acetophenone, chlorinated biphenyl, and chlorinated diphenyl ether. The protic solvent is not particularly limited but may be one or more selected from the group consisting of N-methyl-pyrrolidone (NMP), N,N'-dimethylformamide (DMF), N,N'-diethylformamide (DEF), N,N'-dimethylacetamide (DMAc), dimethylpropanamide (DMPA), N,N-diethylacetamide (DEAc), 3-methoxy-N,N-dimethylpropanamide (KJCMPA), and gammabutyrolactone (GBL).

The mixed solvent may include 10 to 50 wt% of an aprotic solvent and 50 to 90 wt% of a protic solvent. When the aprotic solvent content is too low, imidization cannot be sufficiently achieved in the heating process, making it difficult to secure moldability and lowering the intrinsic viscosity (IV). When the aprotic solvent content is too high, the molecular weight of the polymerization solution is too late (the chain is too small), making it difficult to secure moldability when forming a molded article.

The step of preparing a polyamic acid solution may be performed at 50 to 100 °C, for example, 60 to 90 °C, 65 to 85 °C, or 70 to 80 °C, and the step of preparing a polyimide mixed solution may be performed at 160 to 200 °C, for example, 170 to 190 °C, or 175 to 185 °C.

When the heating temperature is lower than the above range, mechanical properties such as elongation and tensile strength may decrease, and thus a fracture may occur during the molding process, resulting in a decrease in yield and processability. When the heating temperature is higher than the above range, the color of the powder may become dark, and the particle size may increase.

The step of preparing the polyamic acid solution and/or the step of preparing the polyimide mixed solution may be performed under pressurized conditions, such as 1 to 10 bar. In particular, in an embodiment of the present invention, since dianhydride monomers, diamine monomers, and graphene are dispersed in a mixed solvent for polymerization, the polymerization reaction may be performed under normal pressure or pressurized conditions of 1 bar to 3 bar or less. Pressurization may be achieved by injecting an inert gas into the reactor or using water vapor generated inside the reactor. The inert gas may be nitrogen, argon, helium, or neon.

When the pressurized condition is lower than the above range, mechanical properties such as elongation and tensile strength may decrease, and thus a fracture may occur during the molding process, resulting in a decrease in yield and processability. When the pressurized condition is higher than the above range, the color of the powder may become dark, and the particle size may increase.

The reaction time for preparing the polyamic acid solution and/or the polyimide mixed solution may be 1 to 20 hours and may be, for example, 1 to 10 hours, 1 to 8 hours, 1 to 6 hours, or 1 to 4 hours.

When the reaction time is less than the above range, the reaction yield and mechanical properties such as elongation and tensile strength may decrease, and thus a fracture may occur during the molding process, resulting in a decrease in yield and processability. When the reaction time is longer than the above range, the color of the powder may become dark, and the particle size may increase.

The step of obtaining the polyimide powder is a step of filtering and drying the precipitate in the mixed solution to obtain the polyimide powder.

The filtering and drying methods are not particularly limited, and for example, vacuum drying or oven drying may be used.

The dianhydride monomer is not particularly limited as long as it can react with a diamine monomer to form polyimide. For example, the dianhydride monomer according to the present invention may include at least one selected from the group consisting of pyromellitic dianhydride (PMDA), 3,3',4,4'-biphenyltetracarboxylic dianhydride (s-BPDA), 2,3,3',4'-biphenyltetracarboxylic dianhydride (a-BPDA), 3,3',4,4'-benzophenone tetracarboxylic dianhydride (BTDA), oxydiphthalic dianhydride (ODPA), 4,4-(hexafluoroisopropylidene)diphthalic anhydride (6-FDA), and p-phenylenebis(trimellitate anhydride) (TAHQ).

The diamine monomer is not particularly limited as long as it can react with a dianhydride monomer to form polyimide. For example, the diamine monomer according to the present invention may include at least one selected from the group consisting of 1,4-diaminobenzene (PPD), 1,3-diaminobenzene (MPD), 2,4-diaminotoluene, 2,6-diaminotoluene, 4,4'-diaminodiphenyl ether (ODA), 4,4'-methylenediamine (MDA), 4,4-diaminobenzanilide (4,4-DABA), N,N-bis(4-aminophenyl)benzene-1,4-dicarboxamide (BPTPA), 2,2-dimethylbenzidine (M-TOLIDINE), 2,2-bis(trifluoromethyl)benzidine (TFDB), 1,4-bisaminophenoxybenzene (TPE-Q), bisaminophenoxybenzene (TPE-R), 2,2-bisaminophenoxyphenylpropane (BAPP), and 2,2-bisaminophenoxyphenylhexafluoropropane (HFBAPP).

The molar ratio (b/a), which represents the number of moles (b) of the diamine monomer component relative to the number of moles (a) of the dianhydride monomer component, is 1 or less. For example, the upper limit of the molar ratio (b/a) of the diamine monomer component to the dianhydride monomer component may be 0.99 or less, 0.98 or less, 0.97 or less, 0.96 or less, or 0.95 or less, and the lower limit of the molar ratio may be 0.9 or more, 0.91 or more, 0.92 or more, 0.93 or more, or 0.94 or more, and specifically, the molar ratio of the diamine monomer component to the dianhydride monomer component may be 0.9 to 0.99, 0.93 to 0.99, 0.94 to 0.99, 0.95 to 0.99, 0.95 to 0.98, or 0.96 to 0.98.

For example, in the present invention, the number of moles of the diamine monomer component is less than that of the dianhydride monomer component. Stoichiometrically, polyimide may be prepared through a 1:1 reaction between the dianhydride monomer and the diamine monomer, but the reaction mainly proceeds in the presence of a solvent and/or a catalyst, and at this time, a side reaction between the functional group of the solvent or catalyst and diamine may occur. Therefore, an excess amount of diamine is generally added, or equal moles of the dianhydride and diamine are added.

The solid content in the mixed solvent may be 1 to 30 wt%. The solid content may refer to a dianhydride monomer component and a diamine monomer component. For example, the solid content in the mixed solvent may be 1 to 20% or 10 to 20%. Within the above solid content range, the intrinsic viscosity of the polyimide powder may be adjusted to have appropriate processability.

In particular, since the method of preparing a polyimide powder according to an embodiment of the present invention includes dispersing a dianhydride monomer component, a diamine monomer component, and graphene in a mixed solvent to form a polymerization solution (varnish) and then heat treating the polymerization solution to prepare a polyimide powder, the intrinsic viscosity of the polyimide powder is higher (>0.9 dL/g) compared to the conventional water-based polymerization method, resulting in excellent moldability and processability.

A polyimide powder according to another embodiment of the present invention includes a polyimide matrix having polymerization units derived from a dianhydride monomer and a diamine monomer, and graphene dispersed in the polyimide matrix.

Graphene may be included in an amount of 0.01 to 50 parts by weight, preferably 0.1 to 50 parts by weight based on 100 parts by weight of the polyimide powder. Graphene may be included during polymerization of the polyimide powder or may be additionally mixed in a powder form with the polyimide powder.

The tensile strength of the polyimide powder measured according to ASTM D1708 may be 70 MPa or more. For example, the lower limit of tensile strength of the polyimide powder according to the present invention, as measured according to ASTM D 1708, may be 60 MPa or more, 70 MPa or more, 80 MPa or more, or 90 MPa or more, and the upper limit of tensile strength of the polyimide powder may be 110 MPa or less or 105 MPa or less.

The elongation of the polyimide powder, as measured according to ASTM D1708, may be 7% or more. For example, the lower limit of elongation of the polyimide powder according to the present invention, as measured according to ASTM D1708, may be 7% or more, 7.5% or more, or 8% or more, and the upper limit of elongation of the polyimide powder may be 10% or less or 15% or less.

The surface resistance of the polyimide powder, as measured according to ASTM D257, may be 10⁹ Ω/cm² or less, 10⁷ Ω/cm² or less, 10⁵ Ω/cm² or less, 10³ Ω/cm² or less, or 10² Ω/cm² or less. For example, the lower limit of surface resistance of the polyimide powder according to the present invention, as measured according to ASTM D257, may be 10¹ Ω/cm² or more, and the upper limit of surface resistance may be 10⁹ Ω/cm² or less.

In addition, the present invention provides a method of preparing a polyimide molded article including pressure molding the above-described polyimide powder.

The pressure molding step may be performed at a pressure of 30 to 1000 MPa and a temperature of 200 to 400 °C. The pressure molding step may be performed at room temperature and may further include sintering the pressure molded polyimide powder at 200 to 400 °C. When the pressure is lower than the above range, the moldability of the powder may be insufficient during the molding process, and when the pressure is higher than the above range, the processability of the molded article may be reduced. When the temperature is lower than the above range, the fluidity of the molecules may not be secured, and thus the moldability may be significantly reduced, and when the temperature is higher than the above range, some parts may be oxidized due to overheating.

The present invention provides a molded article manufactured using the polyimide powder. The polyimide powder according to the present invention may be manufactured into molded articles through various molding methods, and for example, compression molding, injection molding, slush molding, blow molding, extrusion molding, or a spinning method may be used to manufacture desired molded articles. The form of molded articles is not limited but may be a film, sheet, pellet, tube, belt, injection molded article, or extrusion molded article.

The polyimide powder prepared according to the present invention may be used in various fields such as the electrical/electronics, semiconductors, displays, automobiles, medicine, batteries, and aerospace fields.

### [Advantageous Effects]

A polyimide powder according to the present application can prevent static electricity by exhibiting electrical conductivity while minimizing the decrease in tensile strength and elongation.

A polyimide powder according to the present application can lower the surface resistance of molded articles to 10¹ Ω/cm² or less, making it possible to prevent static electricity by exhibiting electrical conductivity.

Since a polyimide powder according to the present application includes graphene as a filler, unlike other conductive fillers, it is possible to exhibit conductivity while maintaining an elongation of 6% or more and secure the desired conductivity even when a small amount of the filler is added, and thus the decrease in tensile strength and elongation can be minimized.

Since a polyimide powder according to the present application is prepared by dispersing and polymerizing graphene in a mixed organic solvent with a high boiling point instead of the conventional method of polymerizing graphene by adding it to an aqueous solvent, the dispersibility of graphene is excellent, and compared to other conductive fillers, it is possible to secure the desired conductivity even when a small amount is added, and thus the decrease in tensile strength and elongation can be minimized.

However, the effects of the present invention are not limited to the above-mentioned effects, and other effects not mentioned above will be clearly understood by those skilled in the art from the following description.

### [Modes of the Invention]

Hereinafter, the present invention will be described in more detail through examples, which are according to the present invention, and comparative examples, which are not according to the present invention, but the scope of the present invention is not limited to the following examples.

### Example 1

900 g of a mixed solvent of 30 wt% of m-xylene and 70 wt% of N-methylpyrrolidone (NMP), 46 g of ODA, 10 g of graphene, 40 g of PMDA, and 14 g of ODPA were sequentially added to a glass reactor and then stirred at 75 °C for 2 hours to prepare a polyamic acid solution. The polyamic acid solution was heated to 180 °C for 2 hours at normal pressure to prepare a polyimide mixed solution. The powder precipitated in the mixed solution was filtered, washed with ethanol, and dried for 24 hours to prepare a polyimide powder. The prepared powder was pressure molded at >50 MPa and >300 °C to manufacture a molded article.

### Example 2

A molded article was manufactured in the same manner as in Example 1, except that 20 g of graphene was used.

### Example 3

A molded article was manufactured in the same manner as in Example 1, except that 30 g of graphene was used.

### Example 4

A molded article was manufactured in the same manner as in Example 1, except that 50 g of graphene was used.

### Comparative Examples 1 to 5

A polyimide powder was manufactured in the same manner as in Example 1, except that different filler components were used as shown in Table 1 below.

Specifically, in the case of Comparative Example 1, no filler was added, and various conventionally used filler components were added in Comparative Examples 2 to 5.

### Experimental Examples

The physical properties of the prepared polyimide powder were measured using the following methods, and the results thereof are shown in Table 1 below.

### Experimental Example 1-Measurement of elongation and tensile strength

For tensile strength analysis, compression molded samples of the polyimide powder were used, and dog bone-shaped samples were prepared according to ASTM D1708. Analysis samples were prepared by pressure molding the polyimide powder at room temperature at 6 ton/cm² for 5 minutes and then sintering the samples in an oven at 390 °C for 1 hour. A 25-ton hydraulic press was used for compression molding, and tensile strength was measured using Instron 5564 UTM equipment commercially available from Instron.

### Experimental Example 2-Measurement of surface resistance

To measure surface resistance, compression molded samples of the polyimide powder were used, and the surface resistance of Examples and Comparative Examples was measured according to ASTM D257. Specifically, the surface resistance was measured according to ASTM-D257 under conditions of 55% RH, 23 °C, and an applied voltage of 500 V, and a 4-point probe meter (CMT-SR 1000N commercially available from AIT Co., Ltd.) was used for measurement.

**[Table 1]**

| Properties | Filler type | Filler content | Tensile strength | Elongation | Specific gravity | Surface resistance |
|---|---|---|---|---|---|---|
| Units | | % | MPa | % | - | Ω/cm² |
| ASTM | | | D 1708 | D 1708 | D792 | D257 |
| Example 1 | Graphene | 10 | 102 | 9 | 1.44 | 10⁹ |
| Example 2 | Graphene | 20 | 98 | 9 | 1.44 | 10⁷ |
| Example 3 | Graphene | 30 | 93 | 8 | 1.44 | 10³ |
| Example 4 | Graphene | 50 | 90 | 8 | 1.44 | 10¹ |
| Comparative Example 1 | - | 0 | 110 | 14 | 1.43 | 10¹⁵ |
| Comparative Example 2 | Carbon black | 15 | 61 | 3 | 1.46 | 10¹² |
| Comparative Example 3 | Graphite | 15 | 64 | 3 | 1.5 | 10¹² |
| Comparative Example 4 | Graphite | 40 | 50 | 2 | 1.55 | 10⁸ |
| Comparative Example 5 | Conductive graphite | 15 | 62 | 3 | 1.46 | 10¹⁰ |

Referring to Table 1, Examples 1 to 4, in which the polyimide powder having a dianhydride monomer component and a diamine monomer component as polymerization units further includes graphene, had a surface resistance of 10⁹ Ω/cm² or less, and in particular, Example 4, in which the graphene content is 5 wt%, had a surface resistance reduced to 10¹ Ω/cm². Therefore, considering that the surface resistance, based on the molded article, of Examples 1 to 4 of the present invention was lowered to 10¹ Ω/cm², it can be seen that it is possible to prevent static electricity by exhibiting electrical conductivity. In addition, in the case of Examples 1 to 4 of the present invention, the surface resistance, based on the molded article, was lowered to 10¹ Ω/cm², making it possible to prevent static electricity by exhibiting electrical conductivity, and at the same time, the tensile strength was 90 MPa to 102 MPa, and the elongation was 8% to 9%. Considering that the decrease in tensile strength and elongation is not significant, it can be seen that compared to conventional conductive fillers, it is possible to prevent static electricity by exhibiting conductivity while maintaining the tensile strength and the elongation at the desired levels or above. On the other hand, in the case of Comparative Example 1, in which a filler was not added, and Comparative Examples 2 to 5, in which a conventional filler was added to reduce surface resistance, the surface resistance increased to 10¹⁵ Ω/cm². Although Comparative Example 4 had a surface resistance of 10⁸ Ω/cm² due to the addition of graphite, the excess amount of the filler caused a decrease in tensile strength and elongation.

Table 2 below shows experimental results comparing the intrinsic viscosity (IV), moldability, and processability of Examples using a mixture of an aprotic solvent and a protic solvent and Comparative Examples using an aprotic solvent alone or a protic solvent alone, according to an embodiment of the present invention.

Specifically, Comparative Example 6 and Comparative Example 7 were the same as Example 1, except that Comparative Example 6 used m-cresol alone, and Comparative Example 7 used NMP alone. In addition, Examples 6 to 8 were the same as Example 1, except that Example 6 used a 50/50 wt% mixed solution of m-cresol/NMP, Example 7 used a 30/70 wt% mixed solution of m-cresol/NMP, and Example 8 used a 70/30 wt% mixed solution of m-cresol/NMP.

**[Table 2]**

| Solvent | Comparative Example 6 | Comparative Example 7 | Example 6 | Example 7 | Example 8 |
|---|---|---|---|---|---|
| Intrinsic viscosity (IV) | 0.95 | 0.65 | 1.28 | 0.9 | 1.18 |
| Moldability | X | X | O | O | O |
| Processability | X | X | O | O | O |

As shown in Table 2, it can be seen that Comparative Examples 6 and 7, in which a protic solvent was used alone or an aprotic solvent was used alone, had a low intrinsic viscosity (IV), and it was difficult to ensure moldability and processability. On the other hand, Examples 6 to 8 according to an embodiment of the present invention, in which a mixed solvent of a protic solvent and an aprotic solvent was used, had a high intrinsic viscosity (IV) and excellent moldability and processability.

The present invention described above is not limited to the above-described embodiments, as various substitutions and modifications can be made by those skilled in the art within the scope of the technical idea of the present invention.

## Claims

1. A method of preparing a polyimide powder, comprising:
preparing a polyamic acid solution by solution polymerization of a dianhydride monomer and a diamine monomer in an organic solvent including graphene;
preparing a polyimide mixed solution by heating the polyamic acid solution; and
obtaining a polyimide powder by filtering and drying a precipitate in the mixed solution.

2. The method of claim 1, wherein the content of graphene included in the organic solvent is 5 to 70 parts by weight based on 100 parts by weight of the total amount of dianhydride monomers and diamine monomers.

3. The method of claim 1, wherein the organic solvent is a mixed solvent of an aprotic solvent and a protic solvent.

4. The method of claim 3, wherein the aprotic solvent is one or more selected from the group consisting of toluene, xylene, naphtha, anisole, cresol, ethylbenzene, propylbenzene, chlorobenzene, dichlorobenzene, trichlorobenzene, biphenyl, terphenyl, diphenyl ether, diphenyl sulfide, acetophenone, chlorinated biphenyl, and chlorinated diphenyl ether, and the protic solvent is one or more selected from the group consisting of N-methyl-pyrrolidone (NMP), N,N'-dimethylformamide (DMF), N,N'-diethylformamide (DEF), N,N'-dimethylacetamide (DMAc), dimethylpropanamide (DMPA), N,N-diethylacetamide (DEAc), 3-methoxy-N,N-dimethylpropanamide (KJCMPA), and gammabutyrolactone (GBL).

5. The method of claim 3, wherein the mixed solvent includes 10 to 50 wt% of an aprotic solvent and 50 to 90 wt% of a protic solvent.

6. The method of claim 1, wherein the step of preparing the polyamic acid solution is performed at 50 to 100 °C.

7. The method of claim 1, wherein the step of preparing the polyimide mixed solution is performed at 140 to 200 °C.

8. The method of claim 1, wherein the dianhydride monomer includes at least one selected from the group consisting of pyromellitic dianhydride (PMDA), 3,3',4,4'-biphenyltetracarboxylic dianhydride (s-BPDA), 2,3,3',4'-biphenyltetracarboxylic dianhydride (a-BPDA), 3,3',4,4'-benzophenonetetracarboxylic dianhydride (BTDA), oxydiphthalic dianhydride (ODPA), 4,4-(hexafluoroisopropylidene)diphthalic anhydride (6-FDA), and p-phenylenebis(trimellitate anhydride) (TAHQ).

9. The method of claim 1, wherein the diamine monomer includes at least one selected from the group consisting of 1,4-diaminobenzene (PPD), 1,3-diaminobenzene (MPD), 2,4-diaminotoluene, 2,6-diaminotoluene, 4,4'-diaminodiphenyl ether (ODA), 4,4'-methylenediamine (MDA), 4,4-diaminobenzanilide (4,4-DABA), N,N-bis(4-aminophenyl)benzene-1,4-dicarboxamide (BPTPA), 2,2-dimethylbenzidine (M-TOLIDINE), 2,2-bis(trifluoromethyl)benzidine (TFDB), 1,4-bisaminophenoxybenzene (TPE-Q), bisaminophenoxybenzene (TPE-R), 2,2-bisaminophenoxyphenylpropane (BAPP), and 2,2-bisaminophenoxyphenylhexafluoropropane (HFBAPP).

10. A polyimide powder comprising:
a polyimide matrix having polymerization units derived from dianhydride monomers and diamine monomers; and
graphene dispersed in the polyimide matrix,
wherein a tensile strength measured according to ASTM D1708 is 70 MPa or more, an elongation measured according to ASTM D1708 is 7% or more, and a surface resistance measured according to ASTM D257 is 10⁹ Ω/cm² or less.

11. The polyimide powder of claim 10, wherein 0.01 to 50 parts by weight of graphene is included based on 100 parts by weight of the polyimide powder.

12. The polyimide powder of claim 10, wherein the dianhydride monomer includes at least one selected from the group consisting of pyromellitic dianhydride (PMDA), 3,3',4,4'-biphenyltetracarboxylic dianhydride (s-BPDA), 2,3,3',4'-biphenyltetracarboxyl dianhydride (a-BPDA), 3,3',4,4'-benzophenonetetracarboxylic dianhydride (BTDA), oxydiphthalic dianhydride (ODPA), 4,4-(hexafluoroisopropylidene)diphthalic anhydride (6-FDA), and p-phenylenebis (trimellitate anhydride) (TAHQ).

13. The polyimide powder of claim 10, wherein the diamine monomer includes at least one selected from the group consisting of 1,4-diaminobenzene (PPD), 1,3-diaminobenzene (MPD), 2,4-diaminotoluene, 2,6-diaminotoluene, 4,4'-diaminodiphenyl ether (ODA), 4,4'-methylenediamine (MDA), 4,4-diaminobenzanilide (4,4-DABA), N,N-bis(4-aminophenyl)benzene-1,4-dicarboxamide (BPTPA), 2,2-dimethylbenzidine (M-TOLIDINE), 2,2-bis(trifluoromethyl)benzidine (TFDB), 1,4-bisaminophenoxybenzene (TPE-Q), bisaminophenoxybenzene (TPE-R), 2,2-bisaminophenoxyphenylpropane (BAPP), and 2,2-bisaminophenoxyphenylhexafluoropropane (HFBAPP).

14. A method of manufacturing a polyimide molded article, comprising pressure molding the polyimide powder of claim 10.

15. The method of claim 14, wherein the step of pressure molding is performed at a pressure of 30 to 1,000 MPa.

16. The method of claim 14, wherein the step of pressure molding is performed at 200 to 450 °C.

17. The method of claim 14, further comprising sintering the pressure-molded polyimide powder at 200 to 450 °C.

18. A polyimide molded article manufactured by the method of any one of claims 14 to 17.
